# EUROPÄISCHE PATENTSCHRIFT

(11) **EP 2 906 815 B1**
(45) Veröffentlichungstag und Bekanntmachung des Hinweises auf die Patenterteilung: **19.06.2019**
(21) Anmeldenummer: 13788688.3
(22) Anmeldetag: 10.10.2013
(51) Int. Cl.: F02M 63/00, F02M 59/36, F02M 59/46

(54) **VENTIL FÜR EINE PUMPE**
VALVE FOR A PUMP
SOUPAPE POUR UNE POMPE

(30) Priorität: 12.10.2012 DE 102012218593
(43) Veröffentlichungstag der Anmeldung: 19.08.2015
(73) Patentinhaber: Continental Automotive GmbH, 30165 Hannover (DE)
(72) Erfinder: GUGEL, Bernd, 93049 Regensburg (DE); VAN HIMME, Luc, B-9270 Laarne (BE)
(86) Internationale Anmeldenummer: PCT/EP2013/071211
(87) Internationale Veröffentlichungsnummer: WO 2014/057060

(56) Entgegenhaltungen:
- EP-A1- 1 657 435
- DE-A1- 4 243 665
- DE-A1-102008 018 018
- US-A- 4 597 558
- US-A- 5 954 487

## Beschreibung

Die Erfindung betrifft ein Ventil für eine Pumpe gemäß Patentanspruch 1 und eine Pumpe zum Fördern von Kraftstoff gemäß Patentanspruch 12.

Aus dem Stand der Technik ist beispielsweise aus DE 10 2008 018 018 A1 eine Pumpe zum Fördern eines Fluids bekannt. Die Pumpe weist ein Zylindergehäuse auf, das einen Zylinderraum umgibt. In dem Zylinderraum ist axial beweglich ein Pumpenkolben angeordnet. Ein Schließkörper sperrt in einer Schließposition einen Fluidfluss von einer Fluidzuleitung zu dem Zylinderraum und gibt den Fluidfluss ansonsten frei. Die Pumpe weist einen ansteuerbaren Aktor auf, der ein Aktorgehäuse aus einem elektrisch isolierenden Material umfasst. Der Schließkörper ist mit dem Aktor gekoppelt. Der Aktor weist einen Magnetanker auf, der mit dem Schließkörper in Wirkverbindung steht.

DE 42 43 665 A1 beschreibt ein Magnetventil mit einem Stellglied, das indirekt von einem Aktor entlang einer Längserstreckungsrichtung bewegt werden kann, wobei das Stellglied und der Anker über eine Mitnehmerplatte miteinander in Wirkverbindung stehen.

Aus DE 10 2004 028 968 A1 ist ein Ventil mit einer sicheren Öffnungsanzeige bekannt. Das Ventil weist einen Magnetantrieb auf, wobei ein Anker über ein teilkugelförmiges Endstück in eine teilkugelförmige Ausnehmung eines Schließglieds eingesteckt ist.

Aus DE 103 32 345 A1 ist ein Elektromagnetventil bekannt, dessen Ventilschließglied selbstzentrierend um einen Drehpunkt zwischen dem Ventilstößel und dem Ventilsitz angeordnet ist.

EP 1 657 435 A1 offenbart einen Injektor mit einem Servoantrieb, bei dem ein Servoventil von einem elektromagnetischen Aktuator betrieben wird. Der elektromagnetische Aktuator weist einen Anker und eine Magnetspule auf, die ein Schließglied des Servoventiles entlang einer Bewegungsachse bewegen, indem eine Schulter des Ankers mit einer Schulter des Schließgliedes in Wirkverbindung steht. Eine der beiden Schultern weist dabei eine Kugeloberfläche auf, während die andere der beiden Schultern eine konische Oberfläche aufweist, um so eine Beweglichkeit der beiden Schultern gegeneinander gewährleisten zu können.

Die Druckschrift US 4 597 558 A offenbart ein elektromagnetisch betätigbares Einspritzventil mit einem Ventilgehäuse, einer Magnetwicklung und einem Anker, der mit einem Ventilglied gekoppelt ist, das einen zylindrischen Verlängerungsabschnitt und einen mit einem festen Ventilsitz zusammenwirkenden kugelförmigen Dichtabschnitt aufweist. Der Dichtabschnitt ist mit einem kugelförmigen Schwenkabschnitt fest verbunden, welcher in einer an einem Anker vorgesehenen Halterung schwenkbar gelagert ist.

Aus DE 102 55 740 A1 ist ein direkt gesteuertes, proportionales Druckbegrenzungsventil bekannt. Das Ventil weist einen Ventilkegel auf, der mittels eines Ankers eines Proportionalmagneten betätigbar ist. Der Ventilkegel ist kardanisch im Anker abgestützt. Eine zusätzliche Führung des Ventilkegels erfolgt über eine gehäuseseitige Führung, wobei das Spiel zwischen Ventilkegel und gehäuseseitiger Führung geringer als das Spiel zwischen Ventilkegel und Anker ausgeführt ist.

Aus DE 197 00 979 A1 ist ein Magnetventil bekannt, das einen Anker aufweist, der auf ein Schließglied einwirkt, um einen Ventilsitz zu öffnen oder zu schließen.

Aus DE 22 08 183 ist ein Magnetventil bekannt, bei dem ein Schließglied über eine Kugel in Wirkverbindung mit dem Anker steht.

Aus DE 20 52 307 ist ein elektromagnetisch betätigtes Sitzventil bekannt, bei dem der Anker über eine kardanische Verbindung mit einem Ventilstößel gekoppelt ist.

Aus DE 20 2004 002 432 U1 ist ein Magnetdoppelventil bekannt, das zwei nebeneinander liegende Ventilglieder aufweist, die gegen Federkraft durch einen gemeinsamen Magneten über ein in Betätigungsrichtung der Ventilglieder mit einem Schaft in einer Schiebeführung geführt ist, T-förmiges Kraftübertragungsglied in Schließrichtung betätigbar sind, wobei zwischen der Schiebeführung und dem Schaft ein radiales Sicherheitsspiel vorgesehen ist und wobei an der den Ventilgliedern abgewandten Seite der Schiebeführung zwischen dem Schaft des Kraftübertragungsglieds und dem Anker oder einem beweglich geführten Ankerstößel des Magneten ein Kippgelenk vorgesehen ist.

Aus DE 73 35 302 U ist ein Magnetventil bekannt, wobei der Anker mit einer Hülse versehen ist, wobei in der Hülse eine Kugel angeordnet ist, die in Abhängigkeit von der Position des Ankers eine Leitung öffnet oder verschließt.

DE 199 17 756 A1 betrifft ein Elektromagnetventil mit einem Ventilgehäuse, das in einer Gehäuseöffnung einen Ventilsitz aufnimmt, mit einem am Ventilsitz anlegbaren, stößelförmigen Ventilschließglied, das zum Ventilsitz führende Druckmittelkanäle miteinander zu verbinden oder zu trennen vermag, mit einem im Ventilgehäuse axial beweglich angeordneten Magnetanker zur Aufnahme des Ventilschließglieds, das mittels eines Gelenks am Magnetanker beweglich gelagert ist, wobei das Ventilschließglied mit dem Magnetanker eine eigenständig handhabbare Unterbaugruppe bildet. Der Anker weist eine Ankerbohrung auf, die als Kegelstufenbohrung ausgebildet ist, wodurch einerseits die Kegelstufe eine gleichförmige, einfach herzustellende Lagerfläche zur Aufnahme des kegelförmigen Gelenks ermöglicht, an die sich oberhalb des Gelenks die Ankerbohrung zur nahezu vollständigen Aufnahme der Druckfeder mit konstantem Querschnitt anschließt, während unterhalb des Gelenks die Kegelstufe in die relativ enge Ankerbohrung übergeht, in der das Ventilschließglied zur gelenkigen Ausrichtung mit kleinem Radialspiel sicher geführt ist.

Die Aufgabe der Erfindung besteht darin, ein verbessertes Ventil und eine verbesserte Pumpe bereitzustellen, wobei insbesondere ein Verschleiß der Kontaktflächen zwischen dem Aktor und dem Schließkörper reduziert ist.

Die Aufgabe der Erfindung wird durch das Ventil gemäß Patentanspruch 1 und durch die Pumpe gemäß Patentanspruch 12 gelöst.

Weitere vorteilhafte Ausführungsformen sind in den abhängigen Ansprüchen gekennzeichnet.

In der erfindungsgemäßen Ausführungsform ist der Aktor in Form einer Magnetspule und eines magnetischen Ankers ausgebildet, wobei am Anker die Kontaktfläche des Aktors ausgebildet ist. Durch die Verwendung eines Ankers als Teil des Aktors wird ein einfacher, im Bauraum optimierter Aktor ermöglicht. Zudem weist der Anker eine Ausnehmung auf, durch die das Schließglied geführt ist. Die Kontaktfläche des Ankers ist angrenzend an die Ausnehmung ausgebildet.

Ein Vorteil des beschriebenen Ventils besteht darin, dass der Abrieb der Kontaktflächen des Schließgliedes und des Aktors reduziert ist. Dies wird dadurch erreicht, dass die Kontaktflächen des Schließglieds und des Aktors in Form einer Teilkugeloberfläche ausgebildet ist. Durch die Ausbildung als Teilkugeloberfläche ist ein geringerer Abrieb gegeben. Durch die Ausbildung wenigstens einer der Kontaktflächen in Form einer Teilkugeloberfläche ist der Abrieb auch bei einer axialen Schrägstellung des Schließgliedes gegenüber dem Aktor gering. Zudem ist die tatsächliche Auflagefläche auch bei einer Schrägstellung noch relativ groß. Die Teilkugeloberfläche kann jede Art von Krümmung aufweisen, insbesondere kann der Krümmungsradius variieren.

Da die Kontaktflächen als Teilkugeloberflächen ausgebildet Sind, wird die tatsächliche Auflagefläche erhöht, so dass der Abrieb weiter reduziert ist. Zudem wird auch der negative Einfluss einer axialen Schrägstellung auf die tatsächliche Auflagefläche und damit der Abrieb weiter reduziert.

Die Verwendung der Buchse ermöglicht eine einfache und kostengünstige Herstellung der Kontaktfläche, da die Kontaktfläche an der Buchse vor der Befestigung der Buchse am Schließglied hergestellt wird. Die Herstellung der Kontaktfläche an einem einteiligen Schließglied ist deutlich aufwendiger und somit teurer. Zudem kann für die Ausbildung der Buchse ein anderes, insbesondere ein Material mit einer härteren Oberflächenbeschichtung als für die Ausbildung des Schließglieds verwendet werden. Durch die zweiteilige Ausbildung des Schließgliedes ist eine erhöhte Flexibilität bei den verwendeten Herstellungsprozessen und bei den verwendeten Materialien möglich.

In einer weiteren Ausführungsform weist wenigstens eine Kontaktfläche die Form eines Teils einer Kugeloberfläche mit einem konstanten Radius auf. Durch die Ausbildung der Kontaktflächen in Form von Kugeloberflächen ist der Abrieb bei einer axialen Schrägstellung des Schließgliedes gegenüber dem Aktor weiter reduziert. Zudem ist die Ausbildung der Kugeloberfläche mit einem konstanten Radius relativ einfach und kostengünstig auszuführen.

In einer weiteren Ausführungsform sind beide Kontaktflächen als Teil einer Kugeloberfläche mit jeweils konstantem Radius ausgebildet. Durch die Ausbildung der Kugeloberflächen als Kugeloberflächen mit konstantem Radius ist der Abrieb an den Kontaktflächen gering, auch wenn der Aktor und/oder das Schließglied in der axialen Ausrichtung nicht präzise parallel zueinander ausgerichtet sind.

In einer weiteren Ausführungsform sind beide Kontaktflächen als Teil einer konvexen Kugeloberfläche ausgebildet. Auf diese Weise kann eine Reduzierung des Abriebes bei geringen Anforderungen an die Genauigkeit der Kugeloberflächen erreicht werden.

In einer weiteren Ausführungsform liegen die Radien im Bereich von Metern. Durch die großen Radien wird insbesondere bei der Ausbildung von zwei konvexen Kontaktflächen, insbesondere bei konvexen Kugeloberflächen eine große Auflagefläche erreicht und trotzdem bei einer Verkippung zwischen den Kontaktflächen eine große Auflagefläche und damit ein geringer Abrieb erreicht.

In einer weiteren Ausführungsform weisen die Kugeloberflächen der zwei Kontaktflächen unterschiedliche Radien auf. Dies ist insbesondere bei der Ausbildung einer konvex-konkaven Anordnung der Kontaktflächen von Vorteil. Bei der Verwendung eines größeren Radius für die konvex ausgebildete Kugeloberfläche und der Verwendung eines kleineren Radius für die konkav ausgebildete Kugeloberfläche kann eine große Auflagefläche auch bei einer axialen Schrägstellung der zwei Kontaktflächen ohne ein Verspannen erreicht werden.

In einer Ausführungsform ist eine Kontaktfläche wenigstens teilweise konvex und die andere Kontaktfläche wenigstens teilweise konkav ausgebildet. Durch die Paarung einer konvexen Kugeloberfläche mit einer konkaven Kugeloberfläche wird eine große Auflagefläche zwischen dem Aktor und dem Schließglied bereitgestellt, die auch bei einem Verkippen des Aktors gegenüber dem Schließglied eine große Auflagefläche ermöglicht. Somit ist der Abrieb reduziert.

Weiterhin kommt es bei der Betätigung des Ventils zu Situationen, in denen ein Spalt zwischen den Kontaktflächen des Aktors und des Schließglieds vorliegt. In dieser Situation führt die Form der Kugeloberflächen insbesondere in der Paarung konvex-konkav dazu, dass das Aufeinanderschlagen der Kontaktflächen hydraulisch gedämpft ist, da der Raum zwischen den Kontaktflächen mit Fluid, insbesondere mit Kraftstoff gefüllt ist. Somit kann neben der großen Auflagefläche auch bei einer axialen Verkippung zusätzlich noch eine hydraulische Dämpfung durch das Fluid erreicht werden.

In einer weiteren Ausführungsform sind die Krümmungen, insbesondere die Radien der konvexen und der konkaven Kontaktfläche in der Weise gewählt, dass eine ringförmige Auflagefläche zwischen der konvexen und der konkaven Kontaktfläche in einer Mitte der ringförmigen konkaven Kontaktfläche, insbesondere der konkaven Teilkugeloberfläche ausgebildet ist. Dadurch wird eine möglichst große Auflagefläche auch bei einer axialen Schrägstellung des Schließgliedes erreicht. Zudem wird die Ausbildung des hydraulischen Dämpfungspolsters unterstützt.

In einer weiteren Ausführungsform sind die Kontaktflächen als Teilkugelflächen ausgebildet, wobei die Mittelachsen der Teilkugelflächen seitlich versetzt angeordnet sind. Dadurch wird eine seitliche Fehlstellung erreicht, die zu einem etwas vergrößerten Spalt zwischen den Kontaktflächen führt. Der vergrößerte Spalt unterstützt die Ausbildung des fluiden Dämpfungspolsters zwischen den Kontaktflächen.

In einer weiteren Ausführungsform weist das Schließglied einen Abschnitt mit einer Führungsfläche auf, wobei das Schließglied mit dem Abschnitt axial im Ventilgehäuse geführt ist, und wobei der Anker wenigstens einen weiteren Kanal aufweist, wobei der weitere Kanal in die Ausnehmung mündet und zum Zuführen von Fluid von dem Kanal in den Bereich der Kontaktflächen vorgesehen ist.

In einer weiteren Ausführungsform weist das Ventilgehäuse einen weiteren Kanal auf, über den Fluid, insbesondere Kraftstoff in den Bereich der Kontaktflächen geführt wird. Dies führt dazu, dass die Ausbildung des hydraulischen Dämpfungspolsters, das durch das Fluid zwischen den Kontaktflächen gebildet wird, unterstützt wird. Im Kanal des Ventilgehäuses herrscht ein ausreichender Druck, der für die Bildung des hydraulischen Polsters sorgt.

Die Erfindung wird im Folgenden anhand der Figuren näher erläutert. Es zeigen:
Figur 1 einen schematischen Teilausschnitt einer Pumpe für Kraftstoff,
Figur 2 eine schematische Darstellung des Ankers und einer Buchse des Schließglieds,
Figur 3 eine vergrößerte schematische Darstellung der Kontaktflächen des Schließglieds und des Ankers,
Figur 4 eine schematische Darstellung einer Ausführungsform mit zwei konvexen Kontaktflächen, und
Figur 5 eine schematische Darstellung einer weiteren Ausführungsform mit Kontaktflächen, deren Teilkugelflächen mehreren Radien aufweisen.

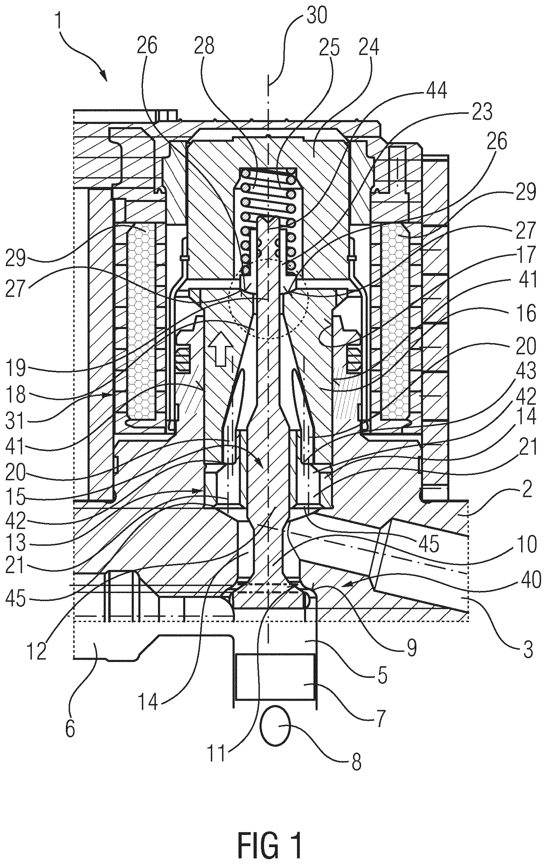

Figur 1 zeigt in einer schematischen Teildarstellung eine Pumpe 1 zur Förderung eines Fluids. Die Pumpe 1 kann beispielsweise in Form einer Kraftstoffpumpe, insbesondere in Form einer Hochdruckpumpe für Kraftstoff ausgebildet sein. Die Pumpe 1 weist ein Gehäuse 2 auf, in das ein erster Kanal 3 eingebracht ist. Der erste Kanal 3 mündet in eine Zulaufkammer 4 und stellt einen Zulaufkanal dar. Die Zulaufkammer 4 ist mit einer Druckkammer 5 verbunden. Die Druckkammer 5 steht mit einem zweiten Kanal 6 in Verbindung, der einen Ablaufkanal darstellt. Der erste Kanal 3 kann beispielsweise mit einer Vorförderpumpe oder mit einem Kraftstofftank verbunden sein. Der zweite Kanal 6 kann mit einem Kraftstoffspeicher oder mit Einspritzventilen in Verbindung stehen. In der Druckkammer 5 ist ein Pumpkolben 7 axial verschiebbar geführt. Der Pumpkolben 7 wird von einer Antriebswelle 8 zu axialen Auf- und Abbewegungen gezwungen. In einem Übergangsbereich 40, der zwischen der Zulaufkammer 4 und der Druckkammer 5 ausgebildet ist, ist am Gehäuse 2 ein Dichtsitz 9 angeordnet. Dem Dichtsitz 9 ist ein zweiter Dichtsitz 11 zugeordnet, der an einem Schließgliedes 10 ausgebildet ist. Der Dichtsitz 9 und der zweite Dichtsitz 11 sind jeweils als Ringflächen ausgebildet. Das Schließglied 10 befindet sich mit dem zweiten Dichtsitz 11 innerhalb der Druckkammer 5. Der Durchmesser der Druckkammer 5 verjüngt sich im Übergangsbereich in Richtung auf die Zulaufkammer 4. Das Schließglied 10 ist durch die Zulaufkammer 4 geführt. Die Zulaufkammer 4 ist gegenüberliegend zur Druckkammer 5 mit einem Ventilraum 13 verbunden. Im Ventilraum 13 ist angrenzend an die Zulaufkammer 4 ein Führungsteil 14 angeordnet. Das Führungsteil 14 weist eine mittige Bohrung 15 auf, die eine Führungsfläche aufweist. Das Schließglied 10 weist einen Führungsabschnitt 12 auf, der in der Bohrung 15 angeordnet ist und von der Führungsfläche der Bohrung 15 axial in einer Mittenachse 30 geführt ist. Oberhalb des Führungsteils 14 ist ein Anker 16 im Ventilraum 13 angeordnet. Der Anker 16 ist zylinderförmig ausgebildet und weist an einer radialen Außenseite eine zylindermantelförmige Führungsfläche 17 auf. Der Ventilraum 13 ist zylinderförmig ausgebildet und weist eine zweite Führungsfläche 41 für den Anker 16 auf. Der Anker 16 ist aus einem magnetischen Material ausgebildet und axial entlang der Mittenachse 30 in dem Ventilraum 13 beweglich angeordnet. Zudem weist der Anker 16 eine zweite Bohrung 18 auf, durch die ein Abschnitt 19 des Schließglieds 10 geführt ist. Der Abschnitt 19 des Schließglieds 10 ragt mit einem Endstück 44 in entgegen der Druckkammer 5 gerichteten Richtung über den Anker 16 hinaus. Die zweite Bohrung 18 des Ankers 16 steht mit mindestens einem weiteren Kanal 20 des Ankers 16 in Verbindung, wobei der weitere Kanal von einer Unterseite 43 des Ankers bis zur zweiten Bohrung 18 geführt ist. Zudem weist das Führungsteil 14 einen zusätzlichen Kanal 21 auf, der von einer Oberseite 42 des Führungsteils 14 zu einer Unterseite 45 des Führungsteils 14 geführt ist. Der zusätzliche Kanal verbindet die Zulaufkammer 4 mit dem weiteren Kanal 21 des Ankers 16. Auf diese Weise wird eine hydraulische Verbindung zwischen der Zulaufkammer 4 und der zweiten Bohrung 18 hergestellt.

Der Ventilraum 13 ist mit einem Gehäusedeckel 24 verschlossen, wobei im Gehäusedeckel 24 eine Aufnahmeöffnung 25 ausgebildet, in die das Endstück 44 des Schließgliedes 10 ragt. Das Schließglied 10 weist gegenüberliegend zum zweiten Dichtsitz 11 an dem Endstück 44 außerhalb des Ankers 16 eine Buchse 23 auf, die als separates Bauteil ausgebildet ist und fest mit dem Schließglied 10 verbunden ist. In der Aufnahmeöffnung 25 ist eine Feder 28 angeordnet, die zwischen dem Gehäusedeckel 24 und der Buchse 23 eingespannt ist. Die Buchse 23 weist eine erste Kontaktfläche 26 auf, die einer zweiten Kontaktfläche 27 des Ankers 16 zugeordnet ist. Die zweite Kontaktfläche 27 ist angrenzend an die Bohrung 16 auf einer Oberseite des Ankers 16 ausgebildet.

In bestimmten Situationen liegt die erste Kontaktfläche 26 mit einer Auflagefläche auf der zweiten Kontaktfläche 27 auf. Die erste und die zweite Kontaktfläche 26,27 sind rotationssymmetrisch zu der Mittenachse 30 ausgebildet und weisen in der Ebene der Mittenachse einen Krümmungsradius auf, der variieren kann. Somit weisen die Kontaktflächen 26,27 die Form von Teilkugeloberflächen auf. Der Ventilraum 13 ist von einer Magnetspule 29 umgeben, die zusammen mit dem Anker 16 einen Aktor zur Betätigung des Schließglieds 10 darstellt. Der Aktor und das Schließglied bilden ein elektromagentisches Ventil 31.

In der dargestellten Situation spannt die Feder 28 das Schließglied 10 in Anlage auf den Anker 16 vor, wobei die erste Kontaktfläche 26 der Buchse 23 auf der zweiten Kontaktfläche 27 des Ankers 16 mit einer Auflagefläche aufliegt. Dabei ist die Zulaufkammer 4 mit der Druckkammer 5 verbunden, d. h. das Ventil 31 ist in einer offenen Position. In der offenen Position des Ventils 31 kann die Pumpe 1 durch eine Bewegung des Pumpkolbens 7 nach unten Fluid, insbesondere Kraftstoff über den ersten Kanal 3 ansaugen. Nach dem Ansaugen wird für einen Verdichtungsvorgang das Ventil 31 durch eine entsprechende Bestromung der Magnetspule 29 geschlossen wird, d. h. dass das Schließglied 10 mit dem zweiten Dichtsitz 11 in Anlage an den Dichtsitz 9 des Gehäuses 2 gebracht wird. Durch die Bestromung der Magnetspule 29 wird der Anker 16 nach oben, d. h. weg von dem Dichtsitz 9, bewegt. Dabei drückt der Anker 16 die zweite Kontaktfläche 27 an die erste Kontaktfläche 26 der Buchse 23 und damit das Schließglied 10 nach oben. Da Kraftstoff über die Bohrungen im Führungsteil 14 und im Anker 16 zwischen die Kontaktflächen 26, 27 geführt ist, ist zwischen den Kontaktflächen 26, 27 ein hydraulischer Fluidfilm vorhanden. Dieser wird auch bei einer Bewegung des Ankers nach oben und einer daraus folgenden Bewegung der Buchse 23 und des Schließglieds 10 nach oben nicht vollständig verdrängt. Erst bei einem Auftreffen des zweiten Dichtsitzes 11 auf den Dichtsitz 9 wird der Anker 16 stärker gegen die Buchse 23 gedrückt, so dass der Fluidfilm aus dem Bereich zwischen den Kontaktflächen 26, 27 vollständig verdrängt wird. Dadurch wird eine hydraulische Dämpfung des Aufschlagens der zweiten Kontaktfläche 27 auf die erste Kontaktfläche 26 abgeschwächt. Bei einem geschlossenen Ventil 31 wird durch eine Bewegung des Pumpkolbens 7 nach oben Kraftstoff mit einem erhöhten Druck in den zweiten Kanal 6 befördert. Der zweite Kanal 6 kann ein Rückschlagventil aufweisen, das einen Rückfluss von Fluid aus dem zweiten Kanal 6 in die Druckkammer 5 verhindert.

Für ein Öffnen des Ventils 31 ist es ausreichend, den Strom durch die Magnetspule abzustellen. Beim Schließen des Ventils 31 wurde die Feder 28 zusammengedrückt. Bei fehlender Magnetkraft entspannt sich die Feder 28, wobei das Schließglied 10 nach unten bewegt wird und der zweite Dichtsitz 11 vom Dichtsitz 9 abgehoben wird. Damit wird das Ventil 31 geöffnet, so dass eine hydraulische Verbindung zwischen der Druckkammer 5 und dem ersten Kanal 3 besteht.

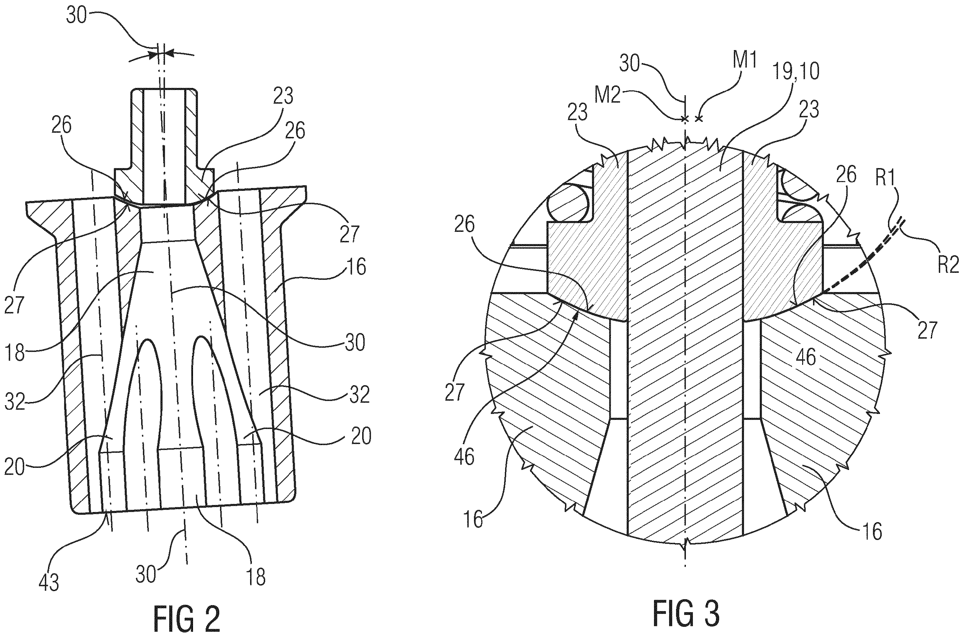

Figur 2 zeigt in einer schematischen Darstellung den Anker 16 und die Buchse 23. In dieser Darstellung sind zur Vereinfachung die weiteren Teile der Pumpe, insbesondere das Schließglied 10 nicht dargestellt. Durch die Ausbildung der ersten und der zweiten Kontaktfläche 26, 27 in Form einer konvexen und einer konkaven Kugeloberfläche, d. h. einer KugelKalotte-Verbindung wird der mechanische Abrieb der Kontaktflächen, d. h. der Verschleiß, reduziert. Dies wird zum einen dadurch erreicht, dass auch bei einer Fehlstellung der axialen Ausrichtung der Buchse 23 gegenüber der Mittenachse Achse 30 trotzdem eine große Auflagefläche zwischen den Kontaktflächen 26, 27 vorhanden ist. Zudem wird durch die Teilkugeloberflächen der Kontaktflächen 26, 27 auch das hydraulische Dämpfungspolster verbessert. Insbesondere bei einer Fehlstellung der Buchse und/oder des Ankers gegenüber der Mittenachse 30 wird die Ausbildung des hydraulischen Dämpfungspolsters unterstützt. Figur 2 zeigt eine Schiefstellung der Buchse 23 von 3 Winkelgrad gegenüber der Mittenachse 30 und dem Anker 16. Durch die Form der Teilkugeloberflächen liegen die Kontaktflächen trotz der Schiefstellung besser aneinander an. Zudem ist der mittlere Abstand zwischen den Kontaktflächen 26, 27 relativ klein. Zwischen den Kontaktflächen 26,27 sammelt sich Flüssigkeit, die insbesondere am Ende der Ankerbewegung, d. h. beim Aufschlag des zweiten Dichtsitzes 11 am ersten Dichtsitz 9 eine vorteilhafte hydraulische Dämpfung bewirkt. Dadurch wird der Verschleiß an den Kontaktflächen zwischen dem Anker und der Buchse reduziert.

In Figur 2 sind deutlich die zweite Bohrung 18 und die weiteren Kanäle 20 zu erkennen. In dem dargestellten Ausführungsbeispiel sind zusätzliche Kanäle 32 vorgesehen, die von einer Unterseite bis zu einer Oberseite des Ankers 16 geführt sind. Dadurch wird ein Fluidaustausch zwischen der Zulaufkammer 4 und der Aufnahmeöffnung 25 verbessert.

Figur 3 zeigt in einer vergrößerten schematischen Darstellung einen Ausschnitt der Buchse 23 und des Ankers 16 mit der ersten und der zweiten Kontaktfläche 26, 27. In dem dargestellten Ausführungsbeispiel weist der Anker 16 eine konkave zweite Kontaktfläche 27 in Form einer ringförmigen Teilkugeloberfläche auf. Die Buchse 23 weist eine ersten Kontaktfläche 26 in Form einer konvex ausgebildeten ringförmigen Teilkugeloberfläche auf. In dem dargestellten Ausführungsbeispiel haben die erste und die zweite Kontaktfläche jeweils einen konstanten Radius, wobei der erste Radius R1 der ersten Kontaktfläche 26 kleiner ist als der zweite Radius R2 der zweiten Kontaktfläche 27. Abhängig von der gewählten Ausführungsform können die Radien der Teilkugeloberflächen der ersten und der zweiten Kontaktfläche 26, 27 auch gleich groß sein. Versuche haben jedoch gezeigt, dass eine bessere Wirkung in Bezug auf die Reduzierung des Abriebs erreicht wird, wenn die konkave Teilkugeloberfläche der zweiten Kontaktfläche 27 einen größeren Radius als die konvexe Teilkugeloberfläche der ersten Kontaktfläche 26 aufweist. Gute Dämpfungseigenschaften werden in einem Bereich von bis zu 20 % Unterschied in den Radien erreicht. Vorzugsweise liegt der Unterschied bei 10 % des Unterschieds der Radien. 10 % Unterschied der Radien bieten einen guten Kompromiss zwischen dem Aufbau des Dämpfungspolsters des Fluids und der Aufliegefläche zwischen den zwei Kontaktflächen 26, 27.

Abhängig von der gewählten Ausführungsform kann auch der Anker 16 die konvexe Teilkugeloberfläche und die Buchse 23 die konkave Teilkugeloberfläche als Kontaktfläche aufweisen. Zudem kann anstelle der separaten Buchse 23 auch das Schließglied einteilig ausgebildet sein und eine entsprechende Kontaktfläche aufweisen.

In der dargestellten Ausführungsform ist ein Mittelpunkt M2 der Teilkugeloberfläche der zweiten Kontaktfläche 27 auf der Mittenachse 30. Ein Mittelpunkt M1 der ersten Teilkugeloberfläche der ersten Kontaktfläche 26 ist seitlich versetzt zur Mittenachse 30 angeordnet. Durch die seitliche Versetzung der Mittelpunkte der Teilkugeloberflächen wird eine leichte Fehlpassung erzeugt, wodurch die Ausbildung des fluiden Dämpfungspolsters unterstützt wird. Die seitliche Versetzung kann beispielsweise im Bereich von 10 % des Radius und mehr liegen. Weiterhin kann die seitliche Versetzung bei 1% bis 5% des Radius liegen. Die Teilkugeloberflächen der ersten und der zweiten Kontaktfläche 26,27 sind in der Ausführung der Figur 3 in der Weise ausgebildet und angeordnet, dass sich die Kontaktflächen 26,27 in einem mittigen Bereich 46 der zweiten Kontaktfläche 27 in Form einer umlaufenden Ringfläche berühren.

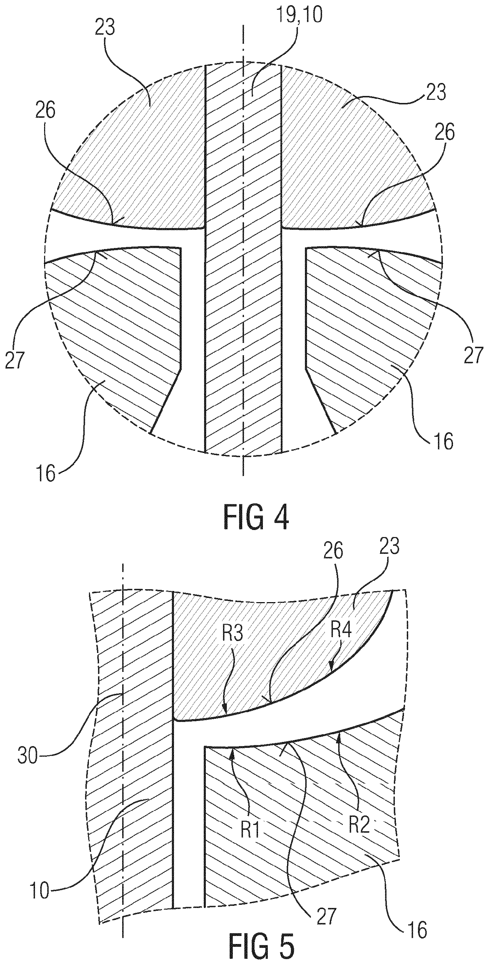

Figur 4 zeigt in einer schematischen Darstellung einen Teilausschnitt einer weiteren Ausführungsform, bei der sowohl die erste Kontaktfläche 26 der Buchse 23 als auch die zweite Kontaktfläche 27 des Ankers 16 eine konvexe Teilkugeloberfläche darstellen. In dieser Ausführungsform sind die Radien relativ groß und können sich im Bereich von Metern befinden. Auch die Ausbildung zweier konvexer Kontaktflächen bietet gegenüber einer Ausbildung von planparallelen Kontaktflächen eine Verbesserung in Bezug auf den Abrieb. Zum einen führt eine Fehlstellung der Buchse und/oder des Ankers gegenüber der Achse 30 zu einer geringeren Reduzierung der tatsächlichen Auflagefläche im Vergleich zu planparallelen Kontaktflächen. Zum anderen kann durch die konvexe Ausbildung der Kontaktflächen ein besseres hydraulisches Dämpfungspolster zwischen den Kontaktflächen ausgebildet werden.

Abhängig von der gewählten Ausführungsform können die erste und die zweite Kontaktfläche 26, 27 zusätzlich zu der Form der Teilkugeloberfläche noch weitere Konturen und/oder Ausnehmungen aufweisen, die die Ausbildung des Dämpfungspolsters unterstützen.

Figur 5 zeigt in einer schematischen Teildarstellung eine Darstellung einer ersten und einer zweiten Kontaktfläche 26,27, wobei die Kontaktflächen rotationssymmetrische Teilkugelflächen in Bezug auf die Mittenachse 30 darstellen, wobei jedoch der Radius der Teilkugeloberflächen 26,27 nicht konstant ist, sondern abhängig von dem Abstand zur Mittenachse 30 variiert. Die unterschiedlichen Radien, R1,R2,R3,R4 sind schematisch in die Figur eingezeichnet. Ein Übergang zwischen den verschiedenen Radien erfolgt kontinuierlich.

## Patentansprüche

1. Ventil (31) für eine Pumpe (1) zum Fördern von Kraftstoff, mit einem Gehäuse (2) und mit einem Schließglied (10), wobei das Schließglied (10) in dem Gehäuse (2) beweglich entlang einer Achse (30) geführt ist, wobei das Schließglied (10) ausgebildet ist, um einen Kanal (3) der Pumpe (1) zu verschließen, wobei ein Aktor (16, 29) vorgesehen ist, wobei das Schließglied (10) eine erste Kontaktfläche (26) aufweist, wobei der Aktor (16, 29) eine zweite Kontaktfläche (27) aufweist, wobei das Schließglied (10) und der Aktor (16, 29) über die Kontaktflächen (26, 27) miteinander in Wirkverbindung stehen, wobei der Aktor in Form einer Magnetspule (29) und eines magnetischen Ankers (16) ausgebildet ist, und wobei die zweite Kontaktfläche (27) am Anker (16) ausgebildet ist, wobei der Anker (16) eine Ausnehmung (18) aufweist, durch die das Schließglied (10) geführt ist, und wobei angrenzend an die Ausnehmung (18) die zweite Kontaktfläche (27) am Anker (16) ausgebildet ist, **dadurch gekennzeichnet, dass** die zwei Kontaktflächen (26, 27) in Form eines Kugeloberflächenabschnitts ausgebildet sind und am Schließglied (10) eine separate Buchse (23) befestigt ist und die erste Kontaktfläche (26) an der Buchse (23) ausgebildet ist.

2. Ventil nach Anspruch 1, wobei wenigstens eine Kugelflächenabschnitt einen konstanten Radius aufweist.

3. Ventil nach einem der vorhergehenden Ansprüche, wobei jede Kontaktfläche als Teil einer konvexen Kugeloberfläche ausgebildet ist.

4. Ventil nach einem der Ansprüche 1 oder 2, wobei eine Kontaktfläche als Teil einer konvexen Kugeloberfläche und die andere Kontaktfläche als Teil einer konkaven Kugeloberfläche ausgebildet ist.

5. Ventil nach Anspruch 4, wobei die konkave Kugeloberfläche einen größeren Radius als die konvexe Kugeloberfläche aufweist, wobei die Kontaktflächen als ringförmiger Teil einer Kugeloberfläche ausgebildet sind, und wobei vorzugsweise eine ringförmige Berührungslinie (45) zwischen der konvexen und der konkaven Kontaktfläche in einer Mitte einer Breite der ringförmigen konkaven Teilkugeloberfläche (26, 27) ausgebildet ist.

6. Ventil nach Anspruch 5, wobei die Unterschiede in den Radien bis zu 20%, insbesondere bis zu 15 %, vorzugsweise bis zu 5 % aufweisen.

7. Ventil nach einem der Ansprüche 4 bis 6, wobei die Teilkugelflächen (26, 27) in der Weise ausgebildet und angeordnet sind, dass die Mittelpunkte (M1, M2) der Teilkugelflächen seitlich versetzt angeordnet sind.

8. Ventil nach einem der vorhergehenden Ansprüche, wobei die Radien der Kugeloberflächen im Bereich von Metern liegen.

9. Ventil nach einem der Ansprüche 1 bis 8, wobei das Schließglied (10) einen Führungsabschnitt (12) mit einer Führungsfläche aufweist, wobei das Schließglied (10) mit dem Führungsabschnitt axial im Gehäuse (2) geführt ist, und wobei der Anker (16) wenigstens einen Kanal (20) aufweist, wobei der Kanal (20) in die Ausnehmung (18) mündet und zum Zuführen von Fluid von dem Kanal (3) in den Bereich der Kontaktflächen (26, 27) vorgesehen ist.

10. Ventil nach Anspruch 9, wobei das Gehäuse (2, 14) ein Führungsteil (14) aufweist, wobei im Führungsteil (14) das Schließglied (10) geführt ist, wobei das Führungsteil (14) einen weiteren Kanal (21) aufweist, der mit einem Ende mit dem Kanal (3) des Gehäuses (2) und mit dem anderen Ende mit dem Kanal (20) des Ankers (16) verbunden ist.

11. Pumpe (1) zum Fördern von Kraftstoff für einen Motor eines Fahrzeugs mit einem Ventil nach einem der vorhergehenden Ansprüche.

## Claims

1. Valve (31) for a pump (1) for delivering fuel, with a housing (2) and with a closing element (10), wherein the closing element (10) is guided moveably along an axis (30) in the housing (2), wherein the closing element (10) is configured to close a channel (3) of the pump (1), wherein an actuator (16, 29) is provided, wherein the closing element (10) has a first contact face (26), wherein the actuator (16, 29) has a second contact face (27), wherein the closing element (10) and the actuator (16, 29) are actively connected to each other via the contact faces (26, 27), wherein the actuator is configured as a magnetic coil (29) and a magnetic rotor (16), and wherein the second contact face (27) is formed on the rotor (16), wherein the rotor (16) has a recess (18) through which the closing element (10) is guided, and wherein the second contact face (27) is formed on the rotor (16) adjacent to the recess (18), **characterized in that** the two contact faces (26, 27) are configured as a spherical surface portion and a separate bush (23) is attached to the closing element (10) and the first contact face (26) is formed on the bush (23).

2. Valve according to Claim 1, wherein at least one spherical surface portion has a constant radius.

3. Valve according to either of the preceding claims, wherein the contact face is formed as part of a convex spherical surface.

4. Valve according to either of Claims 1 and 2, wherein one contact face is formed as part of a convex spherical surface and the other contact face is formed as part of a concave spherical surface.

5. Valve according to Claim 4, wherein the concave spherical surface has a larger radius than the convex
spherical surface, wherein the contact faces are formed as an annular part of a spherical surface and wherein preferably an annular contact line (45) is present between the convex and the concave contact faces in a middle of a width of the annular concave semi-spherical surface (26, 27).

6. Valve according to Claim 5, wherein the differences in the radii are up to 20%, in particular up to 15%, preferably up to 5%.

7. Valve according to any of Claims 4 to 6, wherein the semi-spherical surfaces (26, 27) are formed and arranged such that the center points (M1, M2) of the semi-spherical surfaces are arranged laterally offset.

8. Valve according to any of the preceding claims, wherein the radii of the spherical surfaces are in the meter range.

9. Valve according to any of Claims 1 to 8, wherein the closing element (10) has a guide portion (12) with a guide surface, wherein the closing element (10) is axially guided with the guide portion in the housing (2), and wherein the rotor (16) has at least one channel (20), wherein the channel (20) opens into the recess (18) and is provided for supplying fluid from the channel (3) into the region of the contact faces (26, 27).

10. Valve according to Claim 9, wherein the housing (2, 14) has a guide part (14), wherein the closing element (10) is guided in the guide part (14), wherein the guide
part (14) has a further channel (21) which is connected at one end to the channel (3) of the housing (2) and at the other end to the channel (20) of the rotor (16).

11. Pump (1) for delivering fuel to an engine of a vehicle with a valve according to any of the preceding claims.

## Revendications

1. Soupape (31) pour une pompe (1) pour transporter du carburant, avec un boîtier (2) et avec un organe de fermeture (10), dans laquelle l'organe de fermeture (10) est guidé dans le boîtier (2) de façon mobile le long d'un axe (30), dans laquelle l'organe de fermeture (10) est configuré de façon à fermer un canal (3) de la pompe (1), dans laquelle il est prévu un actionneur (16, 29), dans laquelle l'organe de fermeture (10) présente une première face de contact (26), dans laquelle l'actionneur (16, 29) présente une seconde face de contact (27), dans laquelle l'organe de fermeture (10) et l'actionneur (16, 29) sont en liaison active l'un avec l'autre par les faces de contact (26, 27), dans laquelle l'actionneur est réalisé sous la forme d'une bobine magnétique (29) et d'un induit magnétique (16), et dans laquelle la seconde face de contact (27) est formée sur l'induit (16), dans laquelle l'induit (16) présente un évidement (18), à travers lequel l'organe de fermeture (10) est guidé, et dans laquelle la seconde face de contact (27) est formée sur l'induit (16) à proximité de l'évidement (18), **caractérisée en ce que** les deux faces de contact (26, 27) sont réalisées sous la forme d'une partie de surface sphérique et une douille séparée (23) est fixée à l'organe de fermeture (10) et la première face de contact (26) est formée sur la douille (23).

2. Soupape selon la revendication 1, dans laquelle au moins une partie de surface sphérique présente un rayon constant.

3. Soupape selon l'une quelconque des revendications précédentes, dans laquelle chaque face de contact est réalisée sous la forme d'une partie de surface sphérique convexe.

4. Soupape selon une des revendications 1 ou 2, dans laquelle une face de contact est réalisée sous la forme d'une partie d'une surface sphérique convexe et l'autre face de contact est réalisée sous la forme d'une partie de surface sphérique concave.

5. Soupape selon la revendication 4, dans laquelle la surface sphérique concave présente un plus grand rayon que la surface sphérique convexe, dans laquelle les faces de contact sont réalisées sous la forme d'une partie annulaire d'une surface sphérique, et dans laquelle de préférence une ligne de contact annulaire (45) entre les faces de contact convexe et concave est formée au milieu d'une largeur de la surface sphérique partielle concave annulaire (26, 27).

6. Soupape selon la revendication 5, dans laquelle les différences dans les rayons représentent jusqu'à 20 %, en particulier jusqu'à 15 %, et de préférence jusqu'à 5 %.

7. Soupape selon l'une quelconque des revendications 4 à 6, dans laquelle les faces sphériques partielles (26, 27) sont réalisées et disposées de telle manière que les points centraux (M1, M2) des faces sphériques partielles soient disposés de façon latéralement décalée.

8. Soupape selon l'une quelconque des revendications précédentes, dans laquelle les rayons des faces sphériques se situent dans le domaine des mètres.

9. Soupape selon l'une quelconque des revendications 1 à 8, dans laquelle l'organe de fermeture (10) présente une partie de guidage (12) avec une face de guidage, dans laquelle l'organe de fermeture (10) est guidé axialement dans le boîtier (2) avec la partie de guidage et dans laquelle l'induit (16) présente au moins un canal (20), dans laquelle le canal (20) débouche dans l'évidement (18) et est prévu pour conduire du fluide du canal (3) dans la région des faces de contact (26, 27).

10. Soupape selon la revendication 9, dans laquelle le boîtier (2, 14) présente une partie de guidage (14), dans laquelle l'organe de fermeture (10) est guidé dans la partie de guidage (14), dans laquelle la partie de guidage (14) présente un autre canal (21), qui est relié par une extrémité au canal (3) du boîtier (2) et par l'autre extrémité au canal (20) de l'induit (16).

11. Pompe (1) pour transporter du carburant pour un moteur d'un véhicule, avec une soupape selon l'une quelconque des revendications précédentes.
